Europäisches Patentamt

European Patent Office

Office européen des brevets

(11) Publication number: **0 145 394**
A2

# (12) EUROPEAN PATENT APPLICATION

(21) Application number: **84308179.5**

(22) Date of filing: **26.11.84**

(51) Int. Cl.⁴: **H 02 M 3/155**

(30) Priority: **15.12.83 GB 8333436**

(43) Date of publication of application: **19.06.85**
**Bulletin 85/25**

(84) Designated Contracting States: **AT BE CH DE FR IT LI LU NL SE**

(71) Applicant: **THE MARCONI COMPANY LIMITED, The Grove Warren Lane, Stanmore Middlesex HA7 4LY (GB)**

(72) Inventor: **Bradford, Raymond Ernest, 24 Holmwood Drive, Leicester LE3 9LF (GB)**

(74) Representative: **Hoste, Colin Francis et al, The General Electric Company p.l.c. Central Patent Department (Chelmsford Office) Marconi Research Centre West Hanningfield Road, Great Baddow Chelmsford CM2 8HN, Essex (GB)**

(54) **Voltage converter.**

(57) A low voltage converter is operative to up-convert an unstabilised input voltage of the order of one volt to a much higher output level, typically about 9 volts. A current transformer having three windings is used, one winding of which generates from a primary winding a base current for a switching transistor. The third winding reverses the magnetic flux when the transformer core saturates, thereby forming an oscillatory cycle, the mark-to-space ratio of which determines the voltage step-up ratio. Once the converter has generated a sufficiently high output voltage, a control circuit can take over to produce a precisely controlled output level.

0145394

<u>PATENT SPECIFICATION</u>

<u>VOLTAGE CONVERTER</u>

This invention relates to low voltage power converters, and seeks to provide such a converter which is of efficient nature.

At low voltage, efficiency is of great importance, but it is difficult to provide an accurately controllable converter which is able to operate efficiently at very low input levels, typically of the order of one volt. The present invention seeks to provide such a converter which is of a simple and economical nature.

According to this invention, a low voltage converter includes a current transformer having three magnetically coupled windings; a solid state switch connected in series with a first of said windings across a pair of input low voltage terminals; the second of said windings being arranged to control the conductivity of the switch; the third of said windings being connected in the output path of the converter and being arranged to reset the magnetic state of the transformer when it saturates so as to form an oscillatory circuit.

Preferably the relative values of the forward and reverse series impedances associated with the windings are such that the magnetic state of the transformer is reset much more quickly than it saturates. The ratio of these two periods is related to the step-up voltage ratio of the converter, which typically receives as an input a variable d.c. potential of the order of 1 volt and generates a stabilised output potential of the order of 9 volts. An inductance is also present in the input path of the converter, being positioned between an input terminal and the first of said windings. This inductance forms part of the reactive smoothing circuit which generates a smoothed output voltage level, and it acts as a peak current limiter.

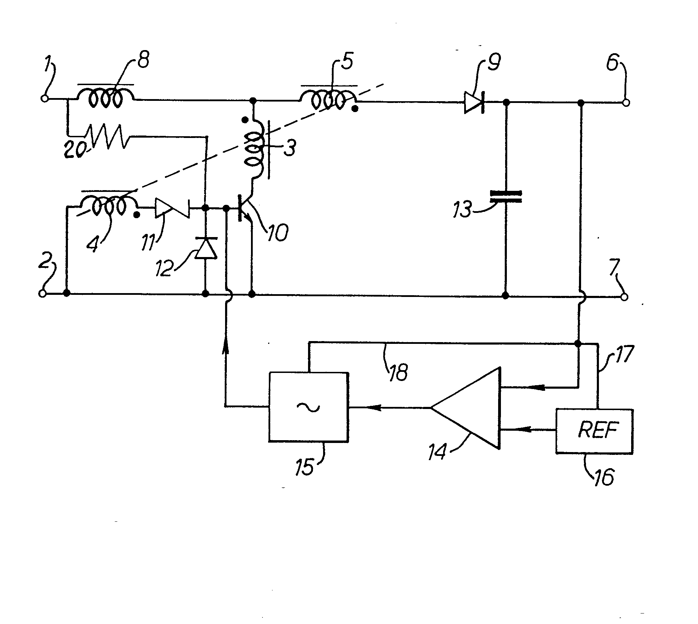

The invention is further described by way of example with reference to the accompanying drawing which shows in diagramatic fashion an embodiment of a low voltage converter.

Referring to the drawing, the converter has a pair of input terminals 1 and 2 across which a very low variable input voltage is applied. Typically, this input voltage will be of the order of one volt and may be derived from a semi-discharged battery cell. Hence its value may vary in an uncontrolled manner. The converter includes a current transformer having three windings 3, 4 and 5, which in practice are wound together in a common core to ensure close magnetic coupling. The polarity of the windings is indicated by the position of the solid dot.

A converted d.c. output voltage is made available at a pair of output terminals 6 and 7, and in this example the output level will be of the order of 9 volts. The winding 5 is connected in series with an inductor 8 connected to the input terminal 1, and also in series with a diode 9 connected to the output terminal 6. The winding 3 is connected in series with a transistor 10, both of which are thus connected across the input terminals 1 and 2. The winding 4 is coupled to the base electrode of transistor 10 via a zener diode 11, and a further diode 12 is connected across the base-emitter junction of the transistor 10. An output capacitor 13 is connected directly across the output terminals 6 and 7 and it, in conjunction with the input inductor 8, forms a smoothing circuit which provides a reasonably constant output voltage level. In this example, winding 3 consists of two turns, winding 4 of fifty turns, and winding 5 of just a single turn.

The circuit as so far described, is a self-oscillating arrangement which is powered entirely by the very low voltage present at input terminals 1 and 2. Its operation is as follows.

When the potential is applied to the terminals 1 and 2 current flows through the inductor 8 and the winding 3 of the transformer. Current is initially applied to the transistor 10 via resistor 20, which initiates conduction. Winding 4 then generates the base current. As winding 4 is directly coupled to winding 3, the transistor base drive circuit is generated within this winding 4 and flows through the zener diode 11, which is forward biased by the potential on the winding 4. Current flow through the transistor 10 rapidly builds up until the magnetic core of the transformer, of which windings 3 and 4 form part, saturates. At this point, the voltage across the winding 4 rapidly collapses, and the transistor 10 is rendered non-conductive. The time taken for the transformer to saturate is inversely proportional to the voltage drop across the base-emitter junction of the transistor 10 and the forward voltage drop of the zener diode 11 as these represent the effective series impedance of the base circuit.

When the transistor 10 becomes non-conductive, the current flowing through the inductor 8 is diverted to flow through the third transformer winding 5 and the diode 9 to the storage capacitor 13. The winding 5 has a polarity as indicated by the dot shown in the drawing, and is in such a sense as to reverse the magnetic flux in the core of the transformer and this continues until the core saturates in the reverse magnetic direction. As the winding 5 is closely coupled to winding 4, the time taken for saturation in this sense is governed by the reverse zener voltage of the zener diode 11 (typically 9 volts) and the forward drop across the diode 12.

Thus the transformer on-to-off current conduction time ratio can be selected by the choice of zener voltage of the zener diode 11, and this ratio directly determines input to output voltage ratio of the converter.

As this circuit does not provide an excessive transistor base current drive even at high input voltage, it is an extremely efficient circuit, as the base current is related
by the turns ratio of the windings 3 and 4 to the
transistor collector current.  The minimum input voltage
present at terminals 1 and 2 which causes the converter to
commence self-oscillation as previously described is
determined by the effective forward base-to-emitter voltage
drop of the transistor  10, and thus a transistor having
this characteristic which is as low as possible is
desirable.

It will be appreciated that the conduction time and hence the
actual value of the output voltage is related to the value of the input
voltage as multiplied by the ratio of the forward and reverse
impedances of the circuit path associated with the base of
the transistor 10.  In particular, the output voltage $V_o$
is given by $V_o = V_i (1 + \frac{t_{on}}{t_{off}})$  where $V_i$ is input voltage,
and $t_{on}$ and $t_{off}$ are the  times  with the transistor
respectively conductive and non-conductive.  Thus the
output level will fluctuate with changes in the input
potential.  In order to provide a more finely controlled
output voltage, the additional circuit components 14, 15
and 16 are advantageously provided.  A comparator 14
receives as one input signal, the output voltage level
present on terminal 6, and it acts to compare this voltage
level with a preset voltage reference derived from a voltage
reference circuit 16, which itself is powered via lead 17
by the relatively high output voltage present on terminal 6.
The output of the comparator 14 is used to adjust the mark-
to-space ratio of a fixed frequency oscillator 15, which is
also powered via lead 18 from the output terminal 6.  The
natural frequency of oscillation of the oscillator 15 is
significantly higher than that of the natural frequency of
oscillation as determined by the three windings 3, 4 and 5
of the current transformer.

Thus, as soon as the voltage control circuit comprising components 14, 15, 16 receives sufficient power from the terminal 6 to commence operation, it effectively takes over the control of the converter circuit as a whole, as it determines both the frequency of operation and the mark-to-space ratio of the transistor 10. The mark-to-space ratio of the oscillator 15 is adjusted so as to bring the output voltage at terminal 6 precisely into agreement with the reference voltage generated by the reference circuit 16. In this example, the referenced voltage will be exactly 9 volts. If the input power supply is momentarily interrupted, the oscillator 15 will, of course, cease operation and the current transformer will recommence natural oscillation, handing control over to the control circuit when the output voltage exceeds the minimum necessary to satisfactorily power it.

Claims

1.    A low voltage converter including a current transformer having three magnetically coupled windings; a solid state switch connected in series with a first of said windings across a pair of input low voltage terminals; the second of said windings being arranged to control the conductivity of the switch; the third of said windings being connected in the output path of the converter and being arranged to reset the magnetic state of the transformer when it saturates so as to form an oscillatory circuit.

2.    A converter as claimed in claim 1 and wherein the relative values of the forward and reverse series impedances associated with the windings are such that the magnetic state of the transformer is reset much more quickly than it saturates.

3.    A converter as claimed in claim 1 or 2 and wherein an inductance is also present in the input path of the converter, being positioned between an input terminal and the first of said windings.

4.    A converter as claimed in claim 1, 2 or 3 and wherein said solid state switch is a transistor, the first of said windings being connected in its collector-emitter path, and the second of said windings being in series with its base connection.

5.    A converter as claimed in any of the preceding claims and wherein a zener diode is provided in series with the second of said windings so to at least partly determine said forward and reverse series impedances.

6.    A converter as claimed in any of the preceding claims, and wherein a control circuit is provided having a free running oscillator with a frequency of oscillation which is greater than that of said oscillating circuit, and which is powered from an output stage of said converter.

7.    A converter as claimed in claim 6 and wherein said control circuit includes a comparator operative to compare the output voltage level of the converter with an internally generated reference level, and to determine the mark-to-space ratio of said  free-running oscillator in dependence thereon.

0145394

1/1